# EUROPÄISCHE PATENTSCHRIFT

(11) **EP 1 193 287 B1**
(45) Veröffentlichungstag und Bekanntmachung des Hinweises auf die Patenterteilung: **13.02.2008**
(21) Anmeldenummer: 01123103.2
(22) Anmeldetag: 27.09.2001
(51) Int. Cl.: C08K 5/101, C09K 3/18, C04B 40/00, C04B 20/10, C04B 24/00, C04B 24/04, C04B 24/08, C04B 24/12, C04B 24/16, C08K 9/04

(54) **Verwendung einer Pulver-Zusammensetzung zur Hydrophobierung von Baustoffmassen**
Use of a powdery composition for hydrophobing building materials
Utilisation d'une composition pulvérulente pour la hydrophobisation des matériaux de construction

(30) Priorität: 02.10.2000 DE 10049072; 12.01.2001 DE 10101190
(43) Veröffentlichungstag der Anmeldung: 03.04.2002
(73) Patentinhaber: Elotex AG, 6203 Sempach Station (CH)
(72) Erfinder: Fiedler, Wolfgang, Dr., 65817 Eppstein (DE); Geissler, Ulrich, Dr., 65239 Hochheim (DE); Schmitz, Ludwig, Dr., 68642 Bürstadt (DE)
(74) Vertreter: Ackermann, Joachim

(56) Entgegenhaltungen:
- EP-A- 0 342 609
- WO-A-98/31643
- DE-A- 2 341 085

## Beschreibung

Die vorliegende Erfindung betrifft die Verwendung einer Pulver-Zusammensetzung, die mindestens einen Carbonsäureester enthält, zur Hydrophobierung von Baustoffmassen.

Seitdem Menschen künstliche Behausungen errichten, um darin zu wohnen, sind sie bemüht, dass keine Feuchtigkeit in diese eindringt. Witterungseinflüsse wie Regen und Schnee können mit baulichen Maßnahmen minimiert werden, z.B. durch weit ausragende Dächer. Der Wasseraufnahme der Baustoffe, bedingt durch deren Kapillaraktivität, kann damit allerdings kein Einhalt geboten werden. Dies kann durch Ausschwemmung von Salzen zu einer irreversiblen Schädigung des Zementes und damit zur Schädigung des gesamten Mörtelverbundes führen. Um dies zu verhindern, muss das Bauwerk entweder nachträglich mit Teer-, Bitumen-, Wachs- oder Paraffinemulsionen beschichtet oder imprägniert werden.

Der Zusatz von Fettsäurecarboxylaten wird schon seit längerem empfohlen (siehe Horst Reul, Handbuch Bauchemie, Verlag für chem. Industrie, H. Ziolkowsky KG, Augsburg, 1991, S. 111 ff.). Auch EP-A-0342609 und DE-A-2341085 sind Beispiele dafür. Die Wirkung dieser Verbindungen ist allerdings begrenzt, weswegen in jüngerer Zeit verstärkt auf siliciumorganische Verbindungen und Emulsionen zurückgegriffen wird.

In der EP-A-0 741 760 wird die Möglichkeit aufgezeigt, Organosiliciumverbindungen bzw. deren Emulsionen zu Dispersionen hinzuzugeben und diese anschließend durch Sprühtrocknung in redispergierbare Pulver umzuwandeln.

In der DE-A-44 02 408 wird die Zusammensetzung und Herstellung redispergierbarer, siliciummodifizierter Dispersionspulver, die einpolymerisierte Organosiliciumeinheiten besitzen, beschrieben.

In der EP-A-0 824 510 wird die Hydrophobierung von Baustoffmassen mittels Emulsionen von Organosiliciumverbindungen beschrieben.

In der DE-A-197 52 659 werden organosiliciumhaltige, hydrophobierende Pulver offenbart, wobei Kieselsäuren als Trägermaterialien für diese Substanzen dienen.

Gegen den Einsatz siliciumorganischer Verbindungen spricht jedoch deren schlechte biologische Abbaubarkeit sowie deren ungünstige Ökobilanz bei der Herstellung, welche die Umwelt stark belastet.

Carbonsäureesterhaltige, in Wasser redispergierbare Pulver sind aus der DE-A-195 32 426 bekannt. Sie dienen dort zur Reduzierung des Luftgehaltes in Frischmörteln. Hinsichtlich deren Einfluss auf die Wasseraufnahme und auf die hydrophobierende Wirkung dieser Verbindungsklasse werden keine Angaben gemacht.

Es bestand daher die Aufgabe, Baustoffmassen bereitzustellen, die keine organosiliciumhaltigen Verbindungen enthalten und dennoch eine vergleichbare Hydrophobierung bewirken.

Gegenstand der vorliegenden Anmeldung ist daher die Verwendung einer Pulver-Zusammensetzung, die mindestens einen Carbonsäureester der Formel CₙH₍₂ₙ₊₁₎COOCₘH₍₂ₘ₊₁₎, mit n = 6 bis 22 und m = 1 bis 8, enthält, zur Hydrophobierung von Baustoffmassen.

Bevorzugt sind Carbonsäureester der Formel CₙH₍₂ₙ₊₁₎COOCₘH₍₂ₘ₊₁₎ mit n = 10 bis 14 und m = 1 bis 4. Besonders bevorzugt als Carbonsäureester sind Laurinsäuremethyl- und/oder -ethylester.

In einer bevorzugten Ausführungsform wird als Pulver eine redispergierbare Dispersionspulver-Zusammensetzung eingesetzt, die 0,1 bis 30 Gew.-%, bezogen auf das Gesamtgewicht der Dispersionspulver-Zusammensetzung, mindestens eines Carbonsäureesters enthält.

Besonders bevorzugt ist eine Dispersionspulver-Zusammensetzung enthaltend
a) mindestens ein wasserunlösliches Polymerisat aus der Gruppe der Vinylester-, Vinylester/Ethylen-, Vinylchlorid-, (Meth)acrylat-, Styrol/(Meth)acrylat-Homo- und/oder Copolymerisate,
b) 0 bis 35 Gew.-%, vorzugsweise 3 bis 15 Gew.-%, bezogen auf die Gesamtmasse des Polymerisats, mindestens eines Schutzkolloids,
c) 0 bis 30 Gew.-%, vorzugsweise 1 bis 20 Gew.-%, bezogen auf die Gesamtmasse des Polymerisats, Antibackmittel und
d) 0,1 bis 30 Gew.-%, vorzugsweise 0,5 bis 10 Gew.-%, bezogen auf die Gesamtmasse des Polymerisats, mindestens eines Carbonsäureesters.

Als wasserunlösliche Polymerisate eignen sich Homo- und Copolymerisate, die in Form einer wässrigen Dispersion vorliegen oder die sich in eine wässrige Dispersion überführen lassen und welche, gegebenenfalls bei erhöhter Temperatur und/oder im alkalischen Medium, nach dem Auftrocknen und gegebenenfalls Aushärten einen festen Film bilden. Die mittlere Korngröße des Pulvers beträgt vorzugsweise 1 bis 1000 µm, besonders bevorzugt 10 bis 700 µm, und insbesondere 50 bis 500 µm.

Bevorzugte wasserunlösliche Polymerisate sind:
- Vinylester-Homo- und -Copolymerisate enthaltend eine oder mehrere Monomereinheiten aus der Gruppe der Vinylester von unverzweigten oder verzweigten Alkylcarbonsäuren mit 1 bis 15 C-Atomen;
- Vinylester-Homo- und -Copolymerisate enthaltend eine oder mehrere Monomereinheiten aus der Gruppe der Vinylester von unverzweigten oder verzweigten Alkylcarbonsäuren mit 1 bis 15 C-Atomen und Ethen;
- Vinylester-Homo- und -Copolymerisate enthaltend eine oder mehrere Monomereinheiten aus der Gruppe der Vinylester von unverzweigten oder verzweigten Alkylcarbonsäuren mit 1 bis 15 C-Atomen und (Meth)acrylsäureester;
- Vinylester-Homo- und -Copolymerisate enthaltend eine oder mehrere Monomereinheiten aus der Gruppe der Vinylester von unverzweigten oder verzweigten Alkylcarbonsäuren mit 1 bis 15 C-Atomen, (Meth)acrylsäureester und Ethen;
- (Meth)acrylsäureester-Homo- und -Copolymerisate enthaltend eine oder mehrere Monomereinheiten aus der Gruppe der Methacrylsäureester und Acrylsäureester von unverzweigten oder verzweigten Alkoholen mit 1 bis 12 C-Atomen;
- (Meth)acrylsäureester-Homo- und -Copolymerisate enthaltend eine oder mehrere Monomereinheiten aus der Gruppe der Methacrylsäureester und Acrylsäureester von unverzweigten oder verzweigten Alkoholen mit 1 bis 12 C-Atomen und Styrol;
- Homo- und Copolymerisate von Fumar- und/oder Maleinsäure-mono- oder diester von unverzweigten oder verzweigten Alkoholen mit 1 bis 12 C-Atomen;
- Homo- und Copolymerisate von Dienen, wie z.B. Butadien oder Isopren, sowie von Olefinen, wie z.B. Ethen oder Propen, wobei die Diene beispielsweise mit Styrol, (Meth)acrylsäureestern oder den Estern der Fumar- oder Maleinsäure copolymerisiert werden können;
- Homo- und Copolymerisate von Vinylaromaten, wie z.B. Styrol, Methylstyrol und Vinyltoluol;
- Homo- und Copolymerisate von Vinylhalogenverbindungen, wie z.B. Vinylchlorid.

Ebenfalls geeignet sind auch wasserunlösliche, filmbildende Polyadditions- und Polykondensationspolymere, wie z.B. Polyurethane, Polyester, Polyether, Polyamide, Melaminformaldehydharze und Phenolformaldehydharze, gegebenenfalls auch in Form ihrer oligomeren Vorprodukte.

Als Vinylester bevorzugt sind Vinylacetat, Vinylpropionat, Vinylbutyrat, Vinyl-2-ethylhexanoat, Vinyllaurat, 1-Methylvinylacetat, Vinylpivalat und Vinylester von α,α-Dialkyl-verzweigten Monocarbonsäuren mit bis zu 15 C-Atomen, beispielsweise VeoVa9^{®}; VeoVa10^{®} oder VeoVa11^{®}. Besonders bevorzugt ist Vinylacetat und VeoVa 10^{®}.

Als Methacrylsäureester oder Acrylsäureester bevorzugt sind Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat und 2-Ethylhexylacrylat. Besonders bevorzugt sind Methylmethacrylat, n-Butylacrylat und 2-Ethylhexylacrylat.

Bevorzugte Estergruppen der Fumar- und Maleinsäure sind Methyl-, Ethyl-, n-Propyl-, iso-Propyl-, n-Butyl-, iso-Butyl-, t-Butyl-, Hexyl-, Ethylhexyl- und Dodecylgruppe.

Die Vinylester-Copolymerisate können 1,0 bis 65 Gew.-%, bezogen auf das Gesamtgewicht der Monomere, α-Olefine, wie z.B. Ethen und Propen, und/oder Vinylaromaten, wie z.B. Styrol, und/oder Vinylhalogenide, wie z.B. Vinylchlorid, und/oder Acrylsäureester bzw. Methacrylsäureester von Alkoholen mit 1 bis 12 C-Atomen, wie z.B. Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat und 2-Ethylhexylacrylat, und/oder ethylenisch ungesättigte Dicarbonsäuren bzw. deren Derivate, wie z.B. Diisopropylfumarat, die Dimethyl-, Methyl-t-butyl-, Di-n-butyl-, Di-t-butyl- und Diethylester der Maleinsäure bzw. Fumarsäure, oder Maleinsäureanhydrid enthalten.

Die (Meth)acrylsäureester-Copolymerisate können 1,0 bis 65 Gew.-%, bezogen auf das Gesamtgewicht der Monomere, α-Olefine, wie z.B. Ethen und Propen, und/oder Vinylaromaten, wie z.B. Styrol, und/oder Vinylhalogenide, wie z.B. Vinylchlorid, und/oder ethylenisch ungesättigte Dicarbonsäuren bzw. deren Derivate, wie z.B. Diisopropylfumarat, die Dimethyl-, Methyl-t-butyl-, Di-n-butyl-, Di-t-butyl- und Diethylester der Maleinsäure bzw. Fumarsäure, oder Maleinsäureanhydrid enthalten.

Des Weiteren können die Vinylester-Copolymerisate und (Meth)acrylsäureester-Copolymerisate noch 0,05 bis 10,0 Gew.-%, bezogen auf das Gesamtgewicht der Monomere, Hilfsmonomere aus der Gruppe der ethylenisch ungesättigten Carbonsäuren, vorzugsweise Acrylsäure oder Methacrylsäure, aus der Gruppe der ethylenisch ungesättigten Carbonsäureamide, vorzugsweise Acrylamid, aus der Gruppe der ethylenisch ungesättigten Sulfonsäuren bzw. deren Salze, vorzugsweise Vinylsulfonsäure und 2-Acrylamido-2-methylpropansulfonsäure (AMPS), und/oder aus der Gruppe der mehrfach ethylenisch ungesättigten Comonomeren, beispielsweise Divinyladipat, Diallylmaleat, Allylmethacrylat oder Triallylcyanurat, enthalten. Als Hilfsmonomere geeignet sind auch vernetzend wirkende Comonomere, wie z.B. Acrylamidoglykolsäure (AGA), Methacrylamidoglykolsäuremethylester (MAGME), N-Methylolacrylamid (NMAA), N-Methylolmethacrylamid, N-Methylolallylcarbamat, Alkylether, wie z.B. der Isobutoxyether, oder Ester des N-Methylolacrylamids, des N-Methylolmethacrylamids oder des N-Methylolallylcarbamats. Entsprechendes gilt für die Copolymerisate der Ester der Malein- oder Fumarsäure.

Die Herstellung der genannten, radikalisch polymerisierbaren, wasserunlöslichen Polymerisate erfolgt vorzugsweise durch Emulsionspolymerisationsverfahren. Die Polymerisation kann dabei diskontinuierlich oder kontinuierlich, mit oder ohne Verwendung von Saatlatices, unter Vorlage aller oder einzelner Bestandteile des Reaktionsgemisches, oder nach dem Dosierverfahren ohne Vorlage durchgeführt werden. Alle Dosierungen erfolgen vorzugsweise im Maße des Verbrauchs der jeweiligen Komponente. Die Polymerisation wird vorzugsweise in einem Temperaturbereich von 0 bis 100°C durchgeführt und mit den für die Emulsionspolymerisation üblicherweise eingesetzten Methoden eingeleitet. Die Initiierung erfolgt üblicherweise mittels der üblichen wasserlöslichen Radikalbildner, die vorzugsweise in Mengen von 0,01 bis 3,0 Gew.-%, bezogen auf das Gesamtgewicht der Monomeren eingesetzt werden. Geeignete wasserlösliche Initiatoren sind beispielsweise Natrium-, Kalium- und Ammoniumperoxodisulfat sowie wasserlösliche Azoinitiatoren. Als Dispergiermittel können alle üblicherweise bei der Emulsionspolymerisation verwendeten Emulgatoren und/oder Schutzkolloide eingesetzt werden.

Gegebenenfalls können bis zu 6 Gew.-%, bezogen auf das Gesamtgewicht der Monomeren, an Emulgatoren eingesetzt werden. Als Emulgatoren kommen hierbei sowohl anionische, kationische als auch nichtionische Emulgatoren in Betracht.

In der besonders bevorzugten Ausführungsform enthält die Dispersionspulver-Zusammensetzung 0 bis 35 Gew.-%, vorzugsweise 3 bis 15 Gew.-% Schutzkolloid, bezogen auf die Gesamtmasse des wasserunlöslichen Polymerisats.

Geeignete Schutzkolloide sind Polyvinylalkohole und deren Derivate wie z.B. Vinylalkohol/Vinylacetat-Copolymere, Polyvinylpyrrolidone, Polysaccharide, wie z.B. Stärken (Amylose und Amylopektin), Cellulose, Guar, Tragacantinsäure, Dextran, Alginate und Carboxymethyl-, Methyl-, Hydroxyethyl-, Hydroxypropyl-Derivate, Proteine, wie z.B. Casein, Sojaprotein, Gelatine, synthetische Polymere, wie z.B. Poly(meth)acrylsäure, Poly(meth)acrylamid, Polyvinylsulfonsäuren und deren wasserlöslichen Copolymere, Melaminformaldehydsulfonate, Naphthalinformaldehydsulfonate, Styrol/Maleinsäure- und Vinylether/Maleinsäure-Copolymere. Besonders bevorzugt als Schutzkolloid bei der Polymerisation ist Polyvinylalkohol. Insbesondere wird als Schutzkolloid ein Polyvinylalkohol mit einem Polymerisationsgrad von 200 bis 3500 und einem Hydrolysegrad von 80 bis 98 Mol-% eingesetzt.

Bevorzugte Antibackmittel sind Aluminiumsilikate, Calcium- und Magnesiumcarbonate bzw. deren Gemische, Kieselsäuren und Gemische von Dolomit und Talk bzw. von Calcit und Talk. Die Antibackmittel besitzen vorzugsweise eine Teilchengröße im Bereich von 0,001 bis 0,5 mm.

Im Falle einer genügenden Wasserlöslichkeit werden die Carbonsäureester bevorzugt als Reinsubstanz zum Emulsionspolymerisat zugegeben. Andernfalls werden die Carbonsäureester in Form einer Emulsion zugegeben. Zur Emulgierung verwendet man vorzugsweise Schutzkolloide, gegebenenfalls in Kombination mit geeigneten Emulgatoren. Als Emulgatoren kommen hierbei sowohl anionische, kationische als auch nichtionische Emulgatoren in Betracht.

Weiterhin bevorzugt ist die Zugabe der Carbonsäureester zur wässrigen Phase der Emulsionspolymerisation. Des Weiteren können die Carbonsäureester während der Emulsionspolymerisation zudosiert werden.

Die Herstellung der Dispersionspulver-Zusammensetzung erfolgt vorzugsweise durch Sprühtrocknung. Die Trocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 50 bis 100°C, vorzugsweise 60 bis 90°C, je nach Anlage, Glastemperatur des Harzes und gewünschtem Trocknungsgrad, gewählt. Zur Erhöhung der Lagerstabilität und der Rieselfähigkeit des Dispersionspulvers wird vorzugsweise ein Antibackmittel parallel zur Dispersion in den Sprühturm eingebracht, so dass es zu einer bevorzugten Ablagerung des Antibackmittels auf den Dispersionsteilchen kommt.

Die Carbonsäureester wirken auch, wenn sie auf anorganische Trägermaterialien, insbesondere Kieselsäure, aufgezogen werden, wie dies in der DE-A-195 35 833 und der DE-A-197 52 659 ausführlich beschrieben wird.

In einer weiteren bevorzugten Ausführungsform wird als Pulver, das den mindestens einen Carbonsäureester enthält, mindestens ein anorganisches Trägermaterial eingesetzt, das 5 bis 160 Gew.-%, bezogen auf das Gewicht des eingesetzten Trägermaterials, mindestens eines Carbonsäureesters aufgezogen enthält.

Als Trägermaterialien werden dabei vorzugsweise Kieselsäure, Antibackmittel, Magnesiumhydrosilicate, feinteiliges Titandioxid, Tonerden, Bleicherden, aktiviertes Aluminiumoxid, Vermiculite, wie z.B. Bentonit, expandiertes Perlit und/oder Phosphate, wie z.B. Natrium-Phosphat, eingesetzt. Besonders bevorzugt wird Kieselsäure als Trägermaterial für den mindestens einen Carbonsäureester eingesetzt.

Die Kieselsäure kann pyrogen hergestellt oder gefällt sein. Diese Kieselsäuresorten sind hochdispers und weisen vorzugsweise eine BET-Oberfläche von mindestens 50 m²/g, besonders bevorzugt von mindestens 100 m²/g, auf.

Diese gecoateten Produkte werden vorzugsweise als Antibackmittel eingesetzt und während des Versprühprozesses zugemischt. Besonders bevorzugt werden sie zum fertigen Dispersionspulver zugegeben oder direkt den Baustoffmassen zugemischt.

Gegenstand der vorliegenden Anmeldung ist auch die Verwendung einer Pulver-Zusammensetzung, enthaltend eine mit mindestens einem Carbonsäureester gecoatete Kieselsäure und ein redispergierbares Dispersionspulver, zur Hydrophobierung von Baustoffmassen, wobei das redispergierbare Dispersionspulver ebenfalls carbonsäureesterhaltig sein kann.

Die Baustoffmassen können insbesondere Beschichtungsmassen oder mineralische Baustoffmischungen für die Herstellung mineralischer Bauteile sein. Die Beschichtungsmassen werden insbesondere für mineralische Untergründe eingesetzt. Die Beschichtungsmassen können rein lösemittelbasierend sein, wässrig oder in Pulverform vorliegen.

Beschichtungsmassen sind beispielsweise Anstriche, wie Mineralfarben, Kalkfarben, Silikatfarben, Dispersionsfarben, Dispersionskalkfarben, Dispersionssilikatfarben und Grundierungen, Putze, wie z.B. Mineralputze und Silikatputze, hochgefüllte Beschichtungen auf Dispersionsbasis, Streichfüller, Armierungsmassen, Spachtelmassen und Fliesenkleber sowie Mörtel, wie z.B. Fugenmörtel.

Als mineralische Baustoffmischungen werden alle Rohmischungen aufgefasst, aus denen mineralische Bauteile hergestellt werden können, welche wiederum zur Herstellung von Bauten benötigt werden und Teil der Bauten sind, insbesondere, wenn sie der Bewitterung ausgesetzt sind oder sonstigen wasserabweisenden Schutz benötigen.

Bauteile sind beispielsweise werkseitig hergestellte Ziegel und Betondachsteine, Faserzement- und Gipsplatten sowie sonstige Fertigteile und Dämmstoffteile. Mineralische Baustoffmischungen können aus Beton, Gips, Kalk, Zement, Quarzsand, Tonmineralien, wie Kalksandstein, Porenbeton, Ziegel, sowie aus Faserbaustoffmischungen bestehen, deren Fasern Naturfasern oder Synthesefasern sind. Geeignete Naturfasern sind Mineralfasern, wie Steinwolle, Quarz- oder Keramikfasern oder Pflanzenfasern, wie Cellulose. Die Cellulosefasern können beispielsweise Jute-, Kokos- oder Hanffasern sein oder aus Papier, Karton oder Altpapier stammen. Geeignete Synthesefasern sind beispielsweise Glasfasern, Kunststofffasern und Kohlefasern.

Die mineralischen Baustoffmassen können neben den mineralischen Bestandteilen auch organische Additive enthalten, wie z.B. Celluloseether oder Verflüssiger. Weitere, den mineralischen Baustoffmassen zusetzbare, organische Additive sind dem Fachmann bekannt (siehe Horst Reul, Handbuch Bauchemie, Verlag für chem. Industrie, H. Ziolkowsky KG, Augsburg, 1991).

Die Baustoffmassen enthalten die hydrophobierenden Pulver-Zusammensetzungen vorzugsweise in Mengen von 0,01 bis 80 Gew.-%.

Die Erfindung wird im folgenden anhand von Ausführungsbeispielen näher beschrieben, ohne dadurch jedoch beschränkt zu werden. Die in den Beispielen angeführten Teile und Prozente beziehen sich auf das Gewicht, soweit nicht anders angegeben.

### Beispiel 1:

1300 Teile einer mit Polyvinylalkohol stabilisierten Dispersion auf Basis Vinylacetat, Versaticsäure-10-vinylester und Butylacrylat (45:45:10), Feststoffgehalt: 54,1%, Viskosität (Haake VT 500, 386.6 s⁻¹): 1150 mPas, Tg: 13°C, Partikelgrößenverteilung: d_{w}: 1863 nm, d_{w}/dₙ: 12,8, Herstellung analog Beispiel 1 der EP-A-0 761 697, werden mit 140 Teilen einer 25 %igen Polyvinylalkohollösung (Viskosität der 4 %igen wässrigen Lösung bei 20°C: 4 mPas, Verseifungsgrad: 88%, Polymerisationsgrad: 630) versetzt.

Zu der Mischung werden jeweils 22,1 Teile der in der folgenden Tabelle aufgeführten Carbonsäureester zugegeben:

| Beispiel Nr. | Carbonsäureester (Anzahl C-Atome Säure/Alkohol) |
|---|---|
| 1a (Vergleich) | Kein |
| 1b | Caprylsäureethylester (C7/C2) |
| 1c | Caprinsäureethylester (C9/C2) |
| 1d | Laurinsäureethylester (C11/C2) |
| 1e | Myristinsäureethylester (C13/C2) |
| 1f | Palmitinsäureethylester (C15/C2) |
| 1g | Laurinsäuremethylester (C11/C1) |
| 1h | Laurinsäurebutylester (C11/C4) |
| 1i | Myristinsäuremethylester (C13/C1) |
| 1j | Myristinsäureisopropylester (C13/i-C3) |

Die Abmischungen werden mit entionisiertem Wasser auf einen Feststoffgehalt von 40 % verdünnt und unter Zugabe eines Antibackmittelgemischs aus Talk und Dolomit sprühgetrocknet (Sprühtrockner der Fa. Niro, Eingangstemperatur: 130°C, Ausgangstemperatur: 65°C, Durchsatz: 1 kg Dispersion/Stunde). Der Antibackmittelgehalt beträgt 15 %.

Die isolierten Dispersionspulver werden in hydraulisch abbindenden Massen eingesetzt und die Wasseraufnahmen wie folgt bestimmt:
Es wird ein Premix hergestellt aus

| | |
|---|---|
| 300 Teilen | Portlandzement CEM 142,5 R |
| 2 Teilen | ^{®}Tylose MH 15002 P6 |
| 200 Teilen | Quarzsand F 31 |
| 368 Teilen | Quarzsand F 34 |
| 100 Teilen | Omyacarb 20 GU |

der in einem Mischer der Fa. Lödige (Typ M5R) 3 Minuten bei 8,5 Skalenteilen homogenisiert wird.
197,5 Teile Premix werden mit 2,5 Teilen Dispersionspulver abgemischt und nach Zugabe von 40 Teilen Wasser 15 Sekunden unter einem Lenartrührer (Fa. Vollrath, Typ EWTHV-1) mit hoher Umdrehungszahl gerührt. Man lässt die Masse 5 Minuten reifen und rührt dann nochmals per Hand durch.

Auf eine 2 cm dicke EPS-Platte wird eine Schablone mit den Abmessungen 0,5 x 10 x 20 cm gelegt. Die Masse wird gleichmäßig eingefüllt und glattgezogen. Man lässt über Nacht stehen, schneidet dann den Probekörper aus und dichtet den Rand mit geschmolzenem Paraffin ab.

Die abgedichteten Probekörper werden bei 23°C zunächst 3 Tage bei gesättigter Wasserdampfatmosphäre und anschließend 3 Tage bei 50 % relativer Luftfeuchte gelagert.

Danach wird der Probekörper gewogen und anschließend mit der Prüffläche nach unten in ein mit Wasser gefülltes Becken gelegt. Nach 1 bzw. 24 Stunden wird der Probekörper herausgenommen, mit einem Schwammtuch trockengetupft und gewogen. Die Massenzunahme wird auf g/m² umgerechnet.

Die Wasseraufnahmen der unter Einsatz der Pulver 1a bis 1j formulierten Mörtelmassen sind in der nachfolgenden Tabelle zusammengestellt:

| Beispiel Nr. | Wasseraufnahme 1 Std. (g/m²) | Wasseraufnahme 24 Std. (g/m²) |
|---|---|---|
| 1a (Vergleich) | 508 | 787 |
| 1b | 247 | 536 |
| 1c | 156 | 354 |
| 1d | 104 | 300 |
| 1e | 113 | 314 |
| 1f | 124 | 376 |
| 1g | 93 | 290 |
| 1h | 97 | 282 |
| 1i | 78 | 259 |
| 1j | 201 | 464 |

Man erkennt, dass die Wasseraufnahme der Baustoffmassen durch Zusatz von Carbonsäureestern deutlich reduziert wird.

### Beispiel 2:

In einer Küchenmaschine werden 50 Teile ^{®}Sipernat 22 (Fällungskieselsäure mit einer Oberfläche nach BET von 190 m²/g, mittlere Größe der Agglomerate 100 µm, 98 % SiO₂) vorgelegt und 50 Teile Laurinsäuremethylester innerhalb von 5 Minuten bei Raumtemperatur zugetropft. Rührgeschwindigkeit: Stufe 2. Nach 3 Minuten Nachrühren wird die pulverförmige Mischung abgefüllt.

Zu 199,6 Teilen des in Beispiel 1 aufgeführten Premixes werden 0,4 Teile des soeben beschriebenen Pulvers gemischt und die Wasseraufnahme bestimmt (Verfahrensweise entsprechend Beispiel 1).

Die Wasseraufnahme im Vergleich zu einer nur mit Dispersionspulver modifizierten Masse ist in der nachfolgenden Tabelle zusammengestellt:

| Beispiel Nr. | Wasseraufnahme | Wasseraufnahme |
|---|---|---|
| | 1 Std. (g/m²) | 24 Std. (g/m²) |
| 1a (Vergleich) | 508 | 787 |
| 2 | 95 | 254 |

Man erkennt, dass die Wasseraufnahme der Baustoffmasse durch Zusatz von Kieselsäure, die mit Laurinsäuremethylester gecoatet ist, deutlich reduziert wird.

## Patentansprüche

1. Verwendung einer Pulver-Zusammensetzung, die mindestens einen Carbonsäureester der Formel CₙH₍₂ₙ₊₁₎COOₘH₍₂ₘ₊₁₎ mit n = 6 bis 22 und m = 1 bis 8 enthält, zur Hydrophobierung von Baustoffmassen.

2. Verwendung gemäss Anspruch 1, **dadurch gekennzeichnet, dass** n = 10 bis 14 und m = 1 bis 4.

3. Verwendung gemäss Anspruch 2, **dadurch gekennzeichnet, dass** als Carbonsäureester Laurinsäuremethyl- und/oder -ethylester eingesetzt wird.

4. Verwendung gemäss mindestens einem der vorhergehenden Ansprüche, **dadurch gekennzeichnet, dass** als Pulver eine redispergierbare Dispersionspulver-Zusammensetzung eingesetzt wird, die 0,1 bis 30 Gew.-%, bezogen auf das Gesamtgewicht der Dispersionspulver-Zusammensetzung, mindestens eines Carbonsäureesters der Formel CₙH₍₂ₙ₊₁₎COOCₘH₍₂ₘ₊₁₎ mit n = 6 bis 22 und m = 1 bis 8 enthält.

5. Verwendung gemäss Anspruch 4, **dadurch gekennzeichnet, dass** die Dispersionspulver-Zusammensetzung
a) mindestens ein wasserunlösliches Polymerisat aus der Gruppe der Vinylester-, Vinylester/Ethylen-, Vinylchlorid-, (Meth)acrylat-, Styrol/(Meth)acrylat-Homo- und/oder Copolymerisate,
b) 0 bis 35 Gew.-%, bezogen auf die Gesamtmasse des Polymerisats, mindestens eines Schutzkolloids,
c) 0 bis 30 Gew.-%, bezogen auf die Gesamtmasse des Polymerisats, Antibackmittel und
d) 0,1 bis 30 Gew.-%, bezogen auf die Gesamtmasse des Polymerisats, mindestens eines Carbonsäureesters der Formel CₙH₍₂ₙ₊₁₎COOCₘH₍₂ₘ₊₁₎ mit n = 6 bis 22 und m = 1 bis 8 enthält.

6. Verwendung gemäss Anspruch 5, **dadurch gekennzeichnet, dass** das Polymerisat a) mittels Schutzkolloiden und/oder Emulgatoren stabilisiert ist.

7. Verwendung gemäss Anspruch 5 oder 6, **dadurch gekennzeichnet, dass** zur Herstellung des Polymerisats a) als Schutzkolloid Polyvinylalkohol eingesetzt wird.

8. Verwendung gemäss mindestens einem der Ansprüche 5 bis 7, **dadurch gekennzeichnet, dass** als Antibackmittel Aluminiumsilikate, Calcium- und Magnesiumcarbonate bzw. deren Gemische, Kieselsäuren und Gemische von Dolomit und Talk bzw. Calcit und Talk eingesetzt werden.

9. Verwendung gemäss mindestens einem der Ansprüche 5 bis 8, **dadurch gekennzeichnet, dass** der Carbonsäureester bei der Herstellung des Polymerisats a) zugegeben wird.

10. Verwendung gemäss mindestens einem der Ansprüche 1 bis 3, **dadurch gekennzeichnet, dass** als Pulver ein anorganisches Trägermaterial eingesetzt wird, das 5 bis 160 Gew.-%, bezogen auf das Gewicht des eingesetzten Trägermaterials, mindestens eines Carbonsäureesters der Formel CₙH(₂ₙ₊₁)COOCₘH(₂ₘ₊₁) mit n 6 bis 22 und m = 1 bis 8 aufgezogen enthält.

11. Verwendung gemäss Anspruch 10, **dadurch gekennzeichnet, dass** als anorganisches Trägermaterial Kieselsäure, Antibackmittel, Magnesiumhydrosilicate, feinteiliges Titandioxid, Tonerden, Bleicherden, aktiviertes Aluminiumoxid, Vermiculite, expandiertes Perlit und/oder Phosphate eingesetzt werden.

12. Verwendung gemäss Anspruch 11, **dadurch gekennzeichnet, dass** als anorganisches Trägermaterial Kieselsäure eingesetzt wird.

13. Verwendung gemäss mindestens einem der Ansprüche 10 bis 12, **dadurch gekennzeichnet, dass** die Zusammensetzung zusätzlich noch ein redispergierbares Dispersionspulver enthält.

14. Verwendung gemäss Anspruch 13, **dadurch gekennzeichnet, dass** das redispergierbare Dispersionspulver carbonsäureesterhaltig ist.

15. Verwendung gemäss mindestens einem der vorhergehenden Ansprüche, **dadurch gekennzeichnet, dass** die Baustoffmasse eine Beschichtungsmasse oder eine mineralische Baustoffmischung für die Herstellung mineralischer Bauteile ist.

16. Verwendung gemäss mindestens einem der vorhergehenden Ansprüche, **dadurch gekennzeichnet, dass** die Baustoffmasse 0,01 bis 80 Gew.-% an hydrophobierender Pulver-Zusammensetzung enthält.

## Claims

1. The use of a powder composition which comprises at least one carboxylic ester of the formula CₙH(₂ₙ₊₁)COOCₘH(₂ₘ₊₁), where n = from 6 to 22 and m = from 1 to 8, for hydrophobicizing construction compositions.

2. The use as claimed in claim 1, wherein n = from 10 to 14 and m = from 1 to 4.

3. The use as claimed in claim 2, wherein methyl laurate and/or ethyl laurate are used as carboxylic ester.

4. The use as claimed in at least one of the preceding claims, wherein the powder used comprises a redispersible dispersion powder composition which comprises from 0.1 to 30% by weight, based on the total weight of the dispersion powder composition, of at least one carboxylic ester of the formula CₙH(₂ₙ₊₁)COOCₘH(₂ₘ₊₁), where n = from 6 to 22 and m = from 1 to 8.

5. The use as claimed in claim 4, wherein the dispersion powder composition comprises
a) at least one water-insoluble polymer selected from the group consisting of the vinyl ester, vinyl ester-ethylene, vinyl chloride, (meth)acrylate, styrene-(meth)acrylate homo- and/or copolymers,
b) from 0 to 35% by weight, based on the total weight of the polymer, of at least one protective colloid,
c) from 0 to 30% by weight, based on the total weight of the polymer, of anticaking agents, and
d) from 0.1 to 30% by weight, based on the total weight of the polymer, of at least one carboxylic ester of the formula CₙH₍₂ₙ₊₁₎COOCₘH₍₂ₘ₊₁₎, where n = from 6 to 22 and m = from 1 to 8.

6. The use as claimed in claim 5, wherein the polymer a) has been stabilized by means of protective colloids and/or of emulsifiers.

7. The use as claimed in claim 5 or 6, wherein polyvinyl alcohol is used as protective colloid in preparing the polymer a).

8. The use as claimed in at least one of claims 5 to 7, wherein the anticaking agents used comprise aluminum silicates, carbonates of calcium and of magnesium or mixtures of these, silicas, and mixtures of dolomite and talc, or of calcite and talc.

9. The use as claimed in at least one of claims 5 to 8, wherein the carboxylic ester is added during the preparation of the polymer a).

10. The use as claimed in at least one of claims 1 to 3, wherein the powder used comprises an inorganic carrier material which comprises from 5 to 160% by weight, based on the weight of the carrier material used, of at least one adsorbed carboxylic ester of the formula CₙH(₂ₙ₊₁)COOCₘH(₂ₘ₊₁), where n = from 6 to 22 and m = from 1 to 8.

11. The use as claimed in claim 10, wherein the inorganic carrier material used comprises silica, anticaking agents, magnesium hydrosilicates, fine-particle titanium dioxide, aluminas, bleaching earths, activated aluminum oxide, vermiculites, expanded perlite, and/or phosphates.

12. The use as claimed in claim 11, wherein the inorganic carrier material used comprises silica.

13. The use as claimed in at least one of claims 10 to 12, wherein the composition also comprises a redispersible dispersion powder.

14. The use as claimed in claim 13, wherein the redispersible dispersion powder comprises carboxylic ester.

15. The use as claimed in at least one of the preceding claims, wherein the construction composition is a coating composition or a mineral construction mix for producing mineral components.

16. The use as claimed in at least one of the preceding claims, wherein the building composition comprises from 0.01 to 80% by weight of hydrophobicizing powder composition.

## Revendications

1. Utilisation d'une composition de poudre, contenant au moins un ester d'acide carboxylique de formule CₙH(₂ₙ₊₁)COOCₘH(₂ₘ₊₁) où n = 6 à 22 et m = 1 à 8, pour rendre hydrophobes des masses pour matériaux de construction.

2. Utilisation selon la revendication 1, **caractérisée en ce que** n = 10 à 14 et m = 1 à 4.

3. Utilisation selon la revendication 2, **caractérisée en ce que** l'on met en oeuvre, en tant qu'ester d'acide carboxylique, un ester méthylique et/ou éthylique d'acide laurique.

4. Utilisation selon au moins l'une quelconque des revendications précédentes, **caractérisée en ce que** l'on met en oeuvre, en tant que poudre, une composition de poudre de dispersion redispersible qui contient 0,1% à 30% en poids, par rapport au poids total de la composition de poudre de dispersion, d'au moins un ester d'acide carboxylique de formule CₙH₍₂ₙ₊₁₎COOCₘH₍₂ₘ₊₁₎ où n = 6 à 22 et m = 1 à 8.

5. Utilisation selon la revendication 4, **caractérisée en ce que** la composition de poudre de dispersion contient
a) au moins un polymère insoluble dans l'eau choisi dans le groupe constitué par les homo- et/ou copolymères d'ester vinylique, ester vinylique/éthylène, de chlorure de vinyle, de (méth)acrylate, styrène/(méth)acrylate,
b) 0% à 35% en poids, par rapport à la masse totale du polymère, d'au moins un colloïde protecteur,
c) 0% à 30% en poids, par rapport à la masse totale du polymère, d'agent antiagglomérant et
d) 0,1% à 30% en poids, par rapport à la masse totale du polymère, d'au moins un ester d'acide carboxylique de formule CₙH(₂ₙ₊₁)COOCₘH(₂ₘ₊₁) où n = 6 à 22 et m = 1 à 8

6. Utilisation selon la revendication 5, **caractérisée en ce que** le polymère a) est stabilisé au moyen de colloïdes protecteurs et/ou d'émulsifiants.

7. Utilisation selon la revendication 5 ou 6, **caractérisée en ce que** l'on met en oeuvre, pour la préparation du polymère a), un poly(alcool de vinyle) en tant que colloïde protecteur.

8. Utilisation selon au moins l'une quelconque des revendications 5 à 7, **caractérisée en ce que** l'on met en oeuvre, en tant qu'agent antiagglomérant, des silicates d'aluminium, des carbonates de calcium et de magnésium ou des mélanges de ceux-ci, des acides siliciques et des mélanges de dolomite et de talc ou de calcite et de talc.

9. Utilisation selon au moins l'une quelconque des revendications 5 à 8, **caractérisée en ce que** l'ester d'acide carboxylique est ajouté lors de la préparation du polymère a).

10. Utilisation selon au moins l'une quelconque des revendications 1 à 3, **caractérisée en ce que** l'on met en oeuvre, en tant que poudre, une matière support inorganique qui contient au moins 5% à 160% en poids, par rapport au poids total de la matière support mise en oeuvre, d'un ester d'acide carboxylique de formule CₙH₍₂ₙ₊₁₎COOCₘH₍₂ₘ₊₁₎ où n = 6 à 22 et m = 1 à 8 sous forme supportée.

11. Utilisation selon la revendication 10, **caractérisée en ce que** l'on met en oeuvre, en tant que matière support inorganique, de l'acide silicique, un agent antiagglomérant, des hydrosilicates de magnésium, du dioxyde de titane finement divisé, des alumines, des argiles décolorantes, de l'oxyde d'aluminium activé, des vermiculites, de la perlite expansée et/ou des phosphates.

12. Utilisation selon la revendication 11, **caractérisée en ce que** l'on met en oeuvre, en tant que matière support inorganique, de l'acide silicique.

13. Utilisation selon au moins l'une quelconque des revendications 10 à 12, **caractérisée en ce que** la composition contient en plus une poudre de dispersion redispersible.

14. Utilisation selon la revendication 13, **caractérisée en ce que** la poudre de dispersion redispersible contient un ester d'acide carboxylique.

15. Utilisation selon au moins l'une quelconque des revendications précédentes, **caractérisée en ce que** la masse pour matériau de construction est une masse de revêtement ou un mélange de matériaux de construction minéraux pour la fabrication d'éléments de construction minéraux.

16. Utilisation selon au moins l'une quelconque des revendications précédentes, **caractérisée en ce que** la masse pour matériau de construction contient 0,01% à 80% en poids de composition de poudre à action hydrophobe.
